# FASCICULE DE BREVET EUROPEEN

(11) **EP 2 585 281 B1**
(45) Date de publication et mention de la délivrance du brevet: **08.05.2019**
(21) Numéro de dépôt: 11738022.0
(22) Date de dépôt: 24.06.2011
(51) Int. Cl.: B29C 70/22, B29C 70/24, F01D 5/14, F01D 5/28, B29B 11/16, C04B 35/83, D03D 41/00, B29L 31/08, D03D 25/00

(54) **AUBE DE TURBOMACHINE À GÉOMÉTRIE COMPLÉMENTAIRE PAIRE/IMPAIRE ET SON PROCÉDÉ DE FABRICATION**
TURBOMASCHINENSCHAUFEL MIT GLEICHMÄSSIGER/UNGLEICHMÄSSIGER KOMPLEMENTÄRER GEOMETRIE UND HERSTELLUNGSVERFAHREN DAFÜR
TURBOMACHINE BLADE HAVING AN EVEN/ODD COMPLEMENTARY GEOMETRY AND ITS MANUFACTURING PROCESS

(30) Priorité: 28.06.2010 FR 1055160
(43) Date de publication de la demande: 01.05.2013
(73) Titulaire: Safran Ceramics, 33185 Le Haillan (FR); Safran Aircraft Engines, 75015 Paris (FR)
(72) Inventeur: ROUSSILLE, Clément, F-33200 Bordeaux (FR); MATEO, Julien, F-33360 Carignan de Bordeaux (FR)
(74) Mandataire: Desormiere, Pierre-Louis
(86) Numéro de dépôt international: PCT/FR2011/051473
(87) Numéro de publication internationale: WO 2012/001278

(56) Documents cités:
- WO-A1-2010/061140
- FR-A1- 2 940 350
- US-A1- 2009 136 350

## Description

### Arrière-plan de l'invention

L'invention concerne des aubes de turbomachine en matériau composite comportant un renfort fibreux densifié par une matrice.

Le domaine visé est celui d'aubes de turbines à gaz pour moteurs aéronautiques ou turbines industrielles.

La réalisation d'aubes en matériau composite pour des turbomachines a déjà été proposée. On se référera notamment à la demande de brevet international PCT/FR2009/052309 déposée conjointement par Snecma et Snecma Propulsion Solide et publiée sous le numéro FR 2 939 129 (et WO 2010 / 061140). Cette demande décrit la fabrication d'une aube de turbomachine en matériau composite comprenant un renfort fibreux densifié par une matrice. De façon plus précise, ce procédé présente la particularité que l'ébauche fibreuse réalisée par tissage tridimensionnel est mise en forme pour obtenir une préforme fibreuse en une seule pièce ayant une première partie formant préforme de pale et pied d'aube et au moins une deuxième partie formant préforme de plateforme ou talon d'aube. Ainsi, après densification de la préforme, il est possible d'obtenir une aube en matériau composite ayant un renfort fibreux constitué par la préforme et densifié par la matrice, et formant une seule pièce avec plateforme et/ou talon intégrés.

L'aube obtenue par un tel procédé présente l'inconvénient que son talon ne peut pas intégrer à la fois une fonction d'étanchéité avec le carter qui entoure les aubes (par la présence de léchettes) et une fonction aérodynamique (par la présence de becquets de recouvrement délimitant à l'extérieur la veine d'écoulement du flux gazeux dans la turbine).

La demande de brevet français n° 09 58931 déposée conjointement par Snecma et Snecma Propulsion Solide et publiée sous le numéro FR 2 953 885, décrit la réalisation d'une aube en matériau composite formant une seule pièce avec plateforme et talon intégré, le talon assurant à la fois la fonction d'étanchéité et la fonction aérodynamique.

Cependant, la réalisation d'un tel talon avec le procédé décrit dans la demande de brevet français n° 09 58931 implique notamment des opérations de mise en forme et de moulage avec des textures fibreuses double couche, opérations qui sont tout à fait réalisables mais qui peuvent être plus complexes à réaliser qu'avec des structures simple couche. En outre, l'aube ainsi réalisée n'intègre pas de muret anti-basculement.

Par ailleurs, en cas d'endommagement du talon de l'aube fabriquée selon le procédé décrit dans la demande de brevet français n° 09 58931, la fonction aérodynamique et la fonction d'étanchéité sont toutes les deux impactées car le talon est formé d'une seule pièce assurant ces deux fonctions.

### Objet et résumé de l'invention

Il est donc souhaitable de pouvoir disposer d'aubes de turbomachine en matériau composite, notamment mais non nécessairement en matériau composite thermostructural tel qu'en CMC, pour des turbines ou compresseurs de turbomachines, aubes qui sont relativement simples à fabriquer et qui intègrent les fonctions requises, notamment les fonctions d'étanchéité, de définition de veine du flux d'écoulement (fonction aérodynamique), et d'anti-basculement.

A cet effet, selon la présente invention, il est proposé un procédé de fabrication d'une aube de turbomachine en matériau composite comprenant un renfort fibreux densifié par une matrice, le procédé comprenant :
- la réalisation par tissage tridimensionnel d'une ébauche fibreuse en une seule pièce,
- la mise en forme de l'ébauche fibreuse pour obtenir une préforme fibreuse d'aube en une seule pièce ayant :
- une première partie formant préforme de pale et pied d'aube,
- une deuxième partie formant préforme d'une plateforme d'aube, ladite préforme d'aube étant alors dépourvue de préforme de muret anti-basculement d'aube, ou formant préforme d'un muret anti-basculement d'aube, ladite préforme d'aube étant alors dépourvue de préforme de plateforme d'aube, et
- une troisième partie formant préforme d'un plateau de becquets de talon d'aube, ladite préforme d'aube étant alors dépourvue de préforme de plateau de léchettes de talon d'aube, ou
- une deuxième partie formant préforme d'un muret anti-basculement d'aube, ladite préforme d'aube étant alors dépourvue de préforme de plateforme d'aube, et
- une troisième partie formant préforme d'un plateau de becquets de talon d'aube, ladite préforme d'aube étant alors dépourvue de préforme de plateau de léchettes de talon d'aube, ou formant préforme d'un plateau de léchettes de talon d'aube, ladite préforme d'aube étant alors dépourvue de préforme de plateau de becquets de talon d'aube,
- la densification de la préforme par une matrice pour obtenir une aube en matériau composite ayant un renfort fibreux constitué par la préforme et densifié par la matrice, et formant une seule pièce avec deux des éléments suivants: plateforme d'aube, muret anti-basculement d'aube, becquets de talon d'aube ou avec deux des éléments suivants : muret anti-basculement d'aube, becquets de talon d'aube et léchettes de talon d'aube.

Par rapport au procédé décrit dans la demande de brevet n° 09 58931, l'invention prévoit de faire assurer par une première aube deux des fonctions suivantes: définition de veine radiale interne, définition de veine radiale externe, étanchéité et anti-basculement et par une deuxième aube les deux autres fonctions non assurées par la première aube, chacune de ces fonctions étant réalisées par des parties distinctes des aubes qui sont fabriquées avec des textures simple couche. Les première et deuxième aubes ainsi réalisées présentent des géométries complémentaires qui permettent, en imbriquant successivement ces première et deuxième aubes, d'assurer toutes les fonctions requises sur les deux faces des pales en regard de chacune de ces aubes.

Selon une particularité avantageuse du procédé, dans la direction longitudinale de l'ébauche fibreuse correspondant à la direction longitudinale de l'aube à fabriquer, l'ébauche fibreuse comprend un premier ensemble de plusieurs couches de fils qui sont liées entre elles pour former une première partie de l'ébauche correspondant à la préforme de pale et pied d'aube, et un deuxième ensemble de plusieurs couches de fils qui sont liées entre elles au moins localement pour former une deuxième partie de l'ébauche correspondant à une préforme de plateforme ou de muret anti-basculement et une troisième partie de l'ébauche correspondant à une préforme de plateau de becquets ou de léchettes de talon d'aube, les fils du premier ensemble de couches de fils n'étant pas liés aux fils du deuxième ensemble de couches de fils, et le premier ensemble de couches de fils étant traversé par des fils du deuxième ensemble de couches de fils au niveau de la ou de chaque deuxième partie de l'ébauche.

L'aménagement de zones de déliaison permet une mise en forme de la préforme fibreuse sans coupe de fils de liage, une telle coupe pouvant amoindrir la tenue mécanique du renfort fibreux, donc de l'aube fabriquée.

Selon une autre particularité du procédé, l'ébauche fibreuse est tissée avec un deuxième ensemble continu de couches de fils et la mise en forme de l'ébauche fibreuse comprend l'élimination par découpe de parties du deuxième ensemble de couches de fils extérieures à la deuxième partie de l'ébauche fibreuse et à la troisième partie de l'ébauche fibreuse.

Selon encore une autre particularité du procédé, à l'emplacement ou au moins à l'un des emplacements où le premier ensemble de couches de fils est traversé par des fils du deuxième ensemble de couches de fils, l'intersection entre une couche de fils du premier ensemble et une couche de fils du deuxième ensemble suit une ligne non orthogonale à la direction longitudinale de l'ébauche fibreuse.

On peut ainsi fabriquer une aube en matériau composite avec une plateforme et/ou un talon qui s'étend d'une façon générale non perpendiculairement à la direction longitudinale de l'aube.

Selon encore une autre particularité du procédé, dans la première partie de l'ébauche fibreuse et dans une direction correspondant à celle s'étendant le long du profil d'une pale d'épaisseur variable dans l'aube à fabriquer, le nombre de couches de fils en direction longitudinale dans le premier ensemble de couches de fils est constant. Les fils du premier ensemble de fils peuvent alors être de titre et/ou de contexture variable.

Avantageusement, l'on réalise par tissage tridimensionnel une bande comprenant une succession d'ébauches fibreuses. Celles-ci peuvent ensuite être découpées dans la bande. Les ébauches peuvent être tissées avec la direction longitudinale de l'aube à fabriquer en sens trame ou en sens chaîne.

Selon la présente invention, il est proposé aussi une aube de turbomachine en matériau composite comprenant un renfort fibreux obtenu par tissage tridimensionnel de fils et densifié par une matrice, l'aube comprenant une première partie constitutive de pale et pied d'aube,
caractérisée en ce que ladite première partie forme une seule pièce avec au moins :
- une deuxième partie constitutive d'une plateforme d'aube, ladite aube étant alors dépourvue d'un muret anti-basculement d'aube, ou d'un muret anti-basculement d'aube (250), ladite aube étant alors dépourvue d'une plateforme d'aube, et
- une troisième partie constitutive d'un plateau de becquets de talon d'aube, ladite aube étant alors dépourvue de plateau de léchettes de talon d'aube, ou
- une deuxième partie constitutive d'un muret anti-basculement d'aube, ladite aube étant alors dépourvue d'une plateforme d'aube, et
- une troisième partie constitutive d'un plateau de becquets de talon d'aube, ladite aube étant alors dépourvue de plateau de léchettes de talon d'aube, ou d'un plateau de léchettes de talon d'aube, ladite aube étant alors dépourvue d'un plateau de becquets de talon d'aube.

L'invention propose en outre un jeu d'aubes comprenant une première et une deuxième aubes selon l'aube de l'invention, la deuxième partie de la première aube étant constitutive d'une plateforme d'aube, la première aube étant alors dépourvue d'un muret anti-basculement d'aube, la troisième partie de la première aube étant constitutive d'un plateau de becquets de talon d'aube, la première aube étant alors dépourvue de plateau de léchettes de talon d'aube, la deuxième partie de la deuxième aube étant constitutive d'un muret anti-basculement d'aube, la deuxième aube étant alors dépourvue d'une plateforme d'aube, la troisième partie de la deuxième aube étant constitutive d'un plateau de léchettes de talon d'aube, la deuxième aube étant alors dépourvue d'un plateau de becquets de talon d'aube.

L'aube peut être en un matériau composite à matrice céramique.

Selon une particularité de l'aube, des fils constitutifs de la partie du renfort fibreux correspondant à la deuxième partie de l'aube traversent la partie du renfort fibreux correspondant à la première partie de l'aube.

La pale de l'aube peut avoir un profil d'épaisseur variable le long duquel la partie de renfort fibreux correspondant à la première partie de l'aube a, dans la direction longitudinale de l'aube, un nombre constant de couches de fils ayant un titre et/ou une contexture variable, ou un nombre variable de couches de fils.

L'invention vise aussi un rotor ou disque de turbomachine et une turbomachine équipés d'une pluralité de jeux d'aubes telles que définies ci-avant.

### Brève description des dessins

L'invention sera mieux comprise à la description faite ci-après, à titre indicatif mais non limitatif, en référence aux dessins annexés sur lesquels :
- la figure 1 est une vue en perspective d'une aube de turbomachine à plateforme et plateau de becquets de talon intégrés ;
- la figure 2 est une vue en perspective d'une aube de turbomachine à muret anti-basculement et plateau de léchettes de talon intégrés ;
- la figure 3 illustre de façon très schématique la disposition de deux ensembles de couches de fils dans une ébauche fibreuse tissée tridimensionnelle destinée à la réalisation d'une préforme fibreuse pour une aube telle que celle illustrée par la figure 1 ;
- les figures 4 et 5 illustrent des étapes successives de réalisation d'une préforme fibreuse pour une aube telle qu'illustrée par la figure 1, à partir de l'ébauche fibreuse de la figure 3 ;
- les figures 6 et 7 illustrent des étapes successives de réalisation d'une préforme fibreuse pour une aube telle qu'illustrée par la figure 2, à partir de l'ébauche fibreuse de la figure 3 ;
- la figure 8 est une vue en coupe montrant le profil, mis à plat, d'une pale d'aube telle que celle de la figure 1 ou 2 ;
- la figure 9 est une vue en coupe d'un ensemble de couches de fils de chaîne permettant d'obtenir un profil tel que celui de la figure 8 ;
- les figures 10A et 10B sont des vues en coupe chaîne montrant un mode de tissage de l'ébauche fibreuse de la figure 1 ;
- la figure 11A est une vue partielle en coupe selon un plan parallèle aux directions chaîne et trame dans une partie de l'ébauche fibreuse de la figure 3 correspondant à l'emplacement de jonction entre pale et plateforme ou muret anti-basculement d'aube ;
- la figure 11B est une vue partielle en coupe trame dans une partie de l'ébauche fibreuse de la figure 3 correspondant à l'emplacement de jonction entre pale et plateforme ou muret anti-basculement d'aube ;
- la figure 12A est une vue partielle en coupe selon un plan parallèle aux directions chaîne et trame dans une partie de l'ébauche fibreuse de la figure 3 correspondant à l'emplacement de jonction entre pale et plateau de becquets ou de léchettes de talon d'aube ;
- la figure 12B est une vue partielle en coupe trame dans une partie de l'ébauche fibreuse de la figure 3 correspondant à l'emplacement de jonction entre pale et plateau de becquets ou de léchettes de talon d'aube ;
- la figure 13A est une vue en coupe trame montrant un exemple de disposition de fils de trame dans une partie d'ébauche fibreuse correspondant à une partie de pied de pale ;
- les figures 13B à 13D sont des vues en coupe trame montrant des plans de chaîne pour un exemple de tissage tridimensionnel (multicouches) dans la partie d'ébauche fibreuse de la figure 13A ;
- la figure 14 est une vue schématique partielle en coupe montrant un autre mode de réalisation d'une partie d'ébauche correspondant à un pied de pale ;
- les figures 15 et 16 illustrent très schématiquement deux modes de réalisation d'une bande fibreuse tissée obtenue par tissage tridimensionnel comprenant une pluralité d'ébauches fibreuses telles que celle de la figure 3 ;
- la figure 17 indique des étapes successives d'un mode de réalisation d'un procédé de fabrication d'une aube de turbomachine conformément à l'invention ;

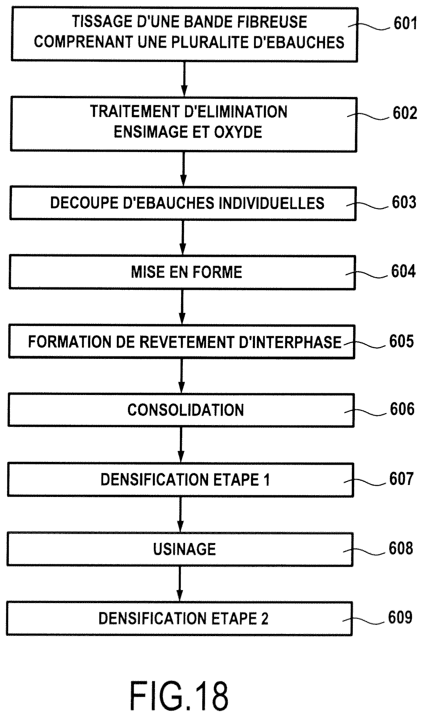

- la figure 18 indique des étapes successives d'un autre mode de réalisation d'un procédé de fabrication d'une aube de turbomachine conformément à l'invention; et
- la figure 19 montre le montage sur un rotor de turbomachine d'une pluralité d'aubes similaires à celles des figures 1 et 2.

### Description détaillée de modes de réalisation

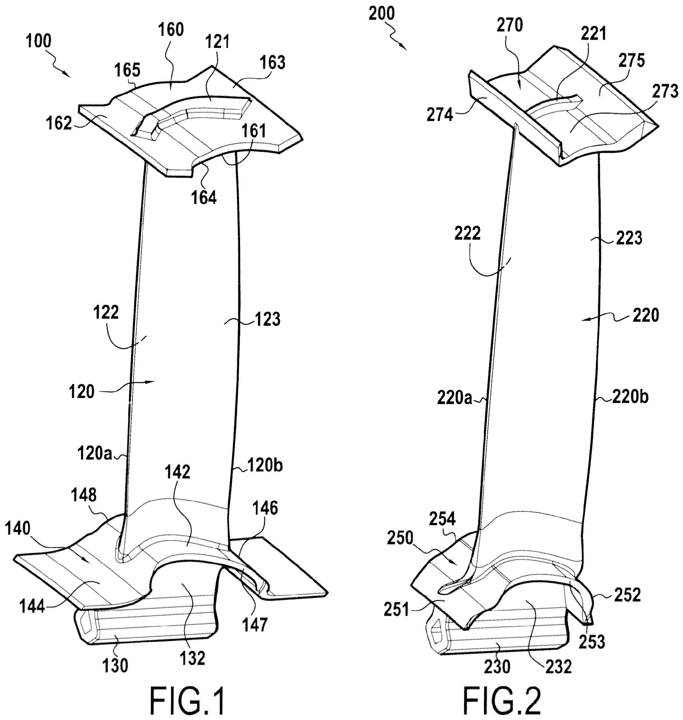

L'invention est applicable à différents types d'aubes de turbomachine à plateformes et/ou talon intégrés, notamment des aubes de compresseur et de turbine de différents corps de turbines à gaz, par exemple une aube de roue mobile de turbine basse pression (BP), telle que celles illustrées par les figures 1 et 2.

La figure 1 illustre une première aube 100 qui comprend de façon en soi bien connue, une pale 120, un pied 130 formé par une partie de plus forte épaisseur, par exemple à section en forme de bulbe, prolongé par une échasse 132. La pale 120 s'étend en direction longitudinale entre son pied 130 et son sommet 121 et présente en section transversale un profil incurvé d'épaisseur variable délimitant deux faces 122 et 123, correspondant respectivement à l'extrados et à l'intrados de la pale 120 et reliant chacune le bord d'attaque 120a et le bord de fuite 120b de cette dernière.

L'aube 100 est montée sur un rotor de turbine (non illustré) par engagement du pied 130 dans un logement de forme correspondante aménagé à la périphérie du rotor.

Conformément à un mode de réalisation de l'invention, la pale 120 comprend en outre une plateforme d'aube 140 et un plateau de becquets de talon d'aube 160.

Plus précisément, à son extrémité radiale interne, la pale 120 se raccorde à la plateforme d'aube 140 dont la face externe (ou supérieure) 142 délimite, radialement à l'intérieur, la veine d'écoulement d'un flux gazeux f. Dans ses parties d'extrémité amont et aval (dans le sens f d'écoulement du flux gazeux), la plateforme 140 se termine par des becquets de recouvrement 144 et 146. En outre, entre ses parties d'extrémité amont et aval, la plateforme 140 présente une portion évidée 147 sur son bords situé du côté de la face 123 de la pale 120, la forme de la portion évidée 147 étant définie pour coopérer avec la face 222 (extrados) de la pale 200 décrite ci-après et avec laquelle l'aube 100 est destinée à coopérer. Sur son bord opposé, c'est-à-dire celui présent du côté 122 de la pale 120, la plateforme 140 présente une portion saillante 148 dont la forme est définie pour coopérer avec la face 223 (intrados) de la pale 200 décrite ci-après et avec laquelle l'aube 100 est destinée à coopérer.

Dans l'exemple illustré, la face 142 de la plateforme est sensiblement perpendiculaire à la direction longitudinale de l'aube. Selon le profil souhaité de la surface intérieure de la veine d'écoulement de flux gazeux, la face 142 de la plateforme peut être également inclinée en formant globalement un angle non nul par rapport à la normale à la direction longitudinale de l'aube, ou la face 142 pourrait avoir un profil globalement non rectiligne, par exemple incurvé.

La pale 120 se raccorde en outre à son extrémité radiale externe à un plateau de becquets de talon d'aube 160 qui délimite sur sa face interne 161 (inférieure), radialement à l'extérieur, la veine d'écoulement du flux gazeux f. Dans ses parties d'extrémité amont et aval, le plateau de becquets de talon d'aube 160 se termine par des becquets de recouvrement 162 et 163.

En outre, entre ses parties d'extrémité amont et aval, le plateau de becquets de talon d'aube 160 présente une portion évidée 164 sur son bords situé du côté de la face 123 de la pale 120, la forme de la portion évidée 164 étant définie pour coopérer avec la face 222 (extrados) de la pale 200 décrite ci-après et avec laquelle l'aube 100 est destinée à coopérer. Sur son bord opposé, c'est-à-dire celui présent du côté 122 de la pale 120, le plateau de becquets de talon d'aube 160 présente une portion saillante 165 dont la forme est définie pour coopérer avec la face 223 (intrados) de la pale 200 décrite ci-après et avec laquelle l'aube 100 est destinée à coopérer.

Dans l'exemple illustré, la face 161 du plateau de becquets de talon d'aube 160 s'étend sensiblement perpendiculairement à la direction longitudinale de l'aube. En variante, selon le profil souhaité de la surface extérieure de la veine d'écoulement de flux gazeux, la face 161 pourrait être inclinée en formant globalement un angle non nul par rapport à la normale à la direction longitudinale de l'aube ou la face 161 pourrait avoir un profil globalement non rectiligne, par exemple incurvé.

Par ailleurs, la pale 120 est dépourvue de muret anti-basculement à son extrémité radiale interne et de léchettes de talon d'aube à son extrémité radiale externe.

La figure 2 illustre une deuxième aube 200 destinée à coopérer avec l'aube 100 et qui comprend une pale 220, un pied 230 formé par une partie de plus forte épaisseur, par exemple à section en forme de bulbe, prolongé par une échasse 232. La pale 200 s'étend en direction longitudinale entre son pied 230 et son sommet 221 et présente en section transversale un profil incurvé d'épaisseur variable délimitant deux faces 222 et 223, correspondant respectivement à l'extrados et à l'intrados de la pale 200 et reliant chacune le bord d'attaque 220a et le bord de fuite 220b de cette dernière. L'aube 200 est montée sur un rotor de turbine (non illustré) par engagement du pied 230 dans un logement de forme correspondante aménagé à la périphérie du rotor.

Conformément à un mode de réalisation de l'invention, à son extrémité radiale, la pale 220 se raccorde à un muret anti-basculement 250 qui comporte à ses extrémités amont et aval des flancs 251 et 252 aptes à prévenir le basculement de l'aube lorsque cette dernière est montée sur un rotor de turbine.

Entre ses extrémités amont et aval, le muret anti-basculement 250 présente une portion évidée 253 sur son bords situé du côté de la face 223 de la pale 220, la forme de la portion évidée 253 étant définie pour coopérer avec la face 122 (extrados) de la pale 100 décrite ci-avant et avec laquelle l'aube 200 est destinée à coopérer. Sur son bord opposé, c'est-à-dire celui présent du côté 222 de la pale 220, le muret anti-basculement 250 présente une portion saillante 254 dont la forme est définie pour coopérer avec la face 123 (intrados) de la pale 100 décrite ci-après et avec laquelle l'aube 200 est destinée à coopérer.

En outre, à son extrémité radiale externe, la pale 220 se raccorde à un plateau de léchettes de talon d'aube 270. Sur sa face externe (supérieure) 272, le plateau de léchettes de talon d'aube 270 délimite une dépression ou baignoire 273. Le long des bords amont et aval de la baignoire 273, le plateau 270 porte des léchettes 274 et 275 à profil en forme de dents dont les extrémités peuvent pénétrer dans une couche de matériau abradable d'un anneau de turbine (non représenté) pour réduire le jeu entre le sommet d'aube et l'anneau de turbine.

Les parties centrales du muret anti-basculement 250 et du plateau de léchettes de talon d'aube 270 s'étendent sensiblement perpendiculairement à la direction longitudinale de l'aube. En variante, selon le profil souhaité de la surface extérieure de la veine d'écoulement de flux gazeux, les parties centrales de ces éléments pourraient être inclinées en formant globalement un angle non nul par rapport à la normale à la direction longitudinale de l'aube ou pourraient avoir un profil globalement non rectiligne, par exemple incurvé.

La pale 220 est par ailleurs dépourvue de plateforme à son extrémité radiale interne et de plateau de becquets de talon d'aube à son extrémité radiale externe, ces deux éléments étant rapportés sur l'aube 200 lors de son montage avec des aubes 100 comme expliqués ci-après.

Ainsi, avec sa plateforme 140 et son plateau de becquets de talon d'aube 160, l'aube 100 assure la fonction de définition de veine tandis qu'avec son muret anti-basculement 250 et son plateau de léchettes de talon d'aube 270, l'aube 200 assure les fonctions d'anti-basculement et d'étanchéité.

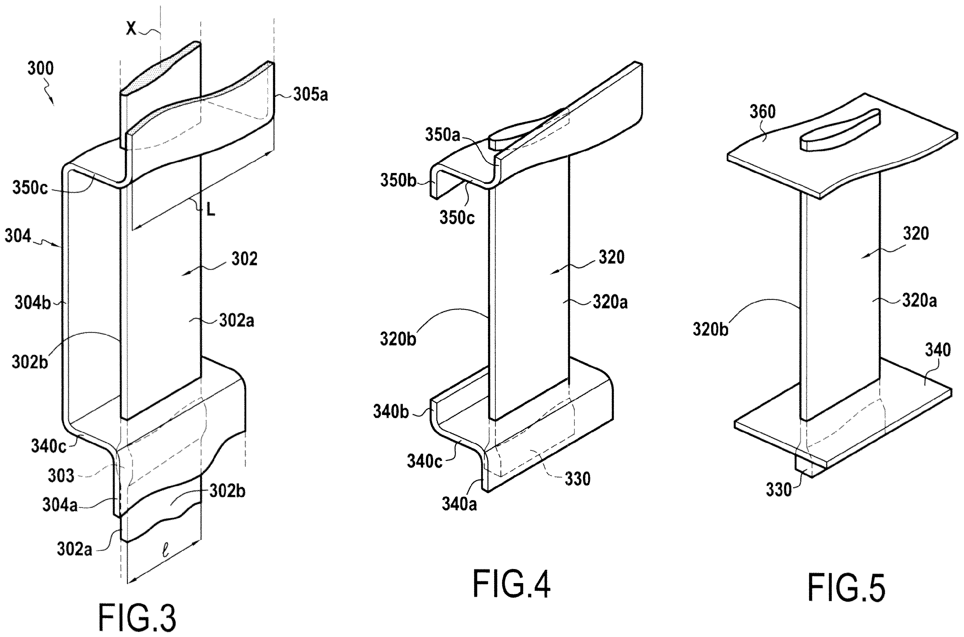

La figure 3 montre très schématiquement une ébauche fibreuse 300 à partir de laquelle une préforme fibreuse d'aube peut être mise en forme afin, après densification par une matrice et usinage éventuel, d'obtenir une aube en matériau composite à plateforme et plateau de becquets de talon intégrés telle que l'aube 100 illustrée par la figure 1.

L'ébauche 300 comprend deux parties 302, 304 obtenues par tissage tridimensionnel ou tissage multicouches, seules les enveloppes de ces deux parties étant représentées sur la figure 3. La partie 302 est destinée, après mise en forme, à constituer une partie de préforme fibreuse d'aube correspondant à une préforme de pale et pied d'aube, cette partie présentant une face 302a destinée à former le côté intrados de la pale et une face 302b destinée à former le côté extrados de la pale. La partie 304 est destinée, après mise en forme, à constituer les parties de préforme fibreuse d'aube correspondant à des préformes de plateforme et de plateau de becquets de talon d'aube.

Les deux parties 302, 304 sont sous forme de bandes s'étendant de façon générale dans une direction X correspondant à la direction longitudinale de l'aube à réaliser. La bande fibreuse 302 présente, dans sa partie destinée à former une préforme de pale, une épaisseur variable déterminée en fonction de l'épaisseur de profil de la pale de l'aube à réaliser. Dans sa partie destinée à former une préforme de pied, la bande fibreuse 302 présente une surépaisseur 303 déterminée en fonction de l'épaisseur du pied de l'aube à réaliser.

La bande fibreuse 302 a une largeur l choisie en fonction de la longueur du profil développé (à plat) de la pale et du pied de l'aube à réaliser tandis que la bande fibreuse 304 a une largeur L supérieure à l choisie en fonction des longueurs développées de la plateforme et du plateau de becquet de talon de l'aube à réaliser (ou du muret anti-basculement et de plateau de léchettes de talon d'aube à réaliser).

La bande fibreuse 304 est d'épaisseur sensiblement constante déterminée en fonction des épaisseurs de plateforme et de plateau de becquets de talon de l'aube à réaliser (ou de muret anti-basculement et de plateau de léchettes de talon d'aube). La bande 304 comprend une première partie 304a qui s'étend le long et au voisinage d'une première face 302a (intrados) de la bande 302, une deuxième partie 304b qui s'étend le long et au voisinage de la deuxième face 302b (extrados) de la bande 302 et une troisième partie 305a qui s'étend le long et au voisinage de la première face 302a de la bande 302.

Les parties 304a et 304b se raccordent par une partie de raccordement 340ç qui s'étend transversalement par rapport à la bande 302 à un emplacement correspondant à celui de la plateforme de l'aube à réaliser. La partie de raccordement 340c traverse la bande sensiblement perpendiculairement à la direction longitudinale de l'ébauche fibreuse. Les parties 304b et 305a se raccordent par une partie de raccordement 350c qui s'étend transversalement par rapport à la bande 302 suivant un profil ondulé à un emplacement correspondant à celui du plateau de becquets de talon à réaliser. Selon la géométrie souhaitée au niveau du plateau de becquets de talon de l'aube, la partie de raccordement 340c et/ou la partie de raccordement 350c pourront traverser la bande 302 en formant un angle non nul par rapport à la normale à la direction longitudinale X de l'ébauche. En outre, le profil de la partie de raccordement 340c et/ou celui de la partie de raccordement 350c pourront être curvilignes au lieu d'être rectilignes comme dans l'exemple illustré.

Comme décrit plus en détail plus loin, les bandes 302 et 304 sont tissées simultanément par tissage tridimensionnel, sans liaison entre la bande 302 et les parties 304a, 304b et 305a de la bande 304 et en tissant une pluralité d'ébauches 300 successives de façon continue dans la direction X.

Les figures 4 à 6 montrent très schématiquement comment une préforme fibreuse ayant une forme proche de celle de l'aube à fabriquer peut être obtenue à partir de l'ébauche fibreuse 300.

La bande fibreuse 302 est coupée à une extrémité dans la surépaisseur 303 et à une autre extrémité un peu au-delà de la partie de raccordement 350ç pour avoir une bande 320 de longueur correspondant à la dimension longitudinale de l'aube à fabriquer avec une partie renflée 330 formée par une partie de la surépaisseur 303 et située à un emplacement correspondant à la position du pied de l'aube à fabriquer. La bande 320 présentant une face 320a destinée à former le côté intrados de la pale et une face 320b destinée à former le côté extrados de la pale.

En outre, des découpes sont pratiquées aux extrémités des parties 304a, 305a de la bande 304 et dans la partie 304b de celle-ci pour laisser subsister des tronçons 340a et 340b de part et d'autre de la partie de raccordement 340ç, et des tronçons 350a et 350b de part et d'autre de la partie de raccordement 350c, comme le montre la figure 4. Les longueurs des tronçons 340a, 340b et 350a, 350b sont déterminées en fonction des longueurs de plateforme et de plateau de becquets de talon dans l'aube à fabriquer.

Du fait de la déliaison entre la bande 302 de l'ébauche fibreuse, d'une part, et les parties 304a, 304b et 305a, d'autre part, les tronçons 340a, 340b, 350a et 350b peuvent être rabattus perpendiculairement à la bande 302 sans couper de fils pour former des plateaux 340, 360, comme montré par la figure 5.

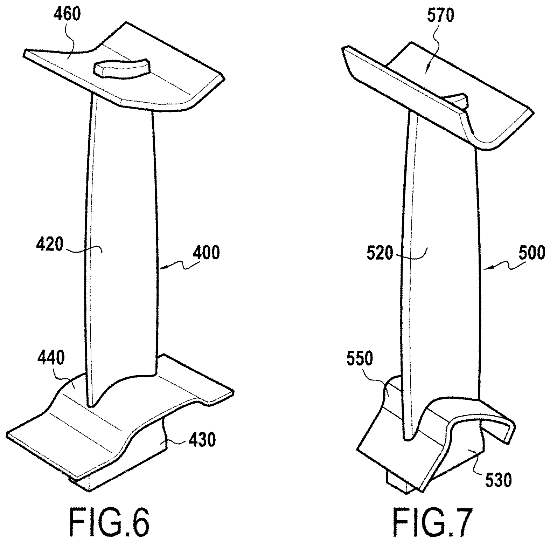

Une préforme fibreuse 400 de l'aube à fabriquer est ensuite obtenue par moulage avec déformation de la bande 302 pour reproduire le profil incurvé de la pale de l'aube et déformation des plateaux 340, 360 pour reproduire des formes semblables à celles de la plateforme et du plateau de becquets de talon de l'aube, comme le montre la figure 6. On obtient ainsi une préforme avec une partie 420 de préforme de pale, une partie 430 de préforme de pied (avec préforme d'échasse) et des parties 440, 460 de préforme de plateforme et de préforme de talon.

La figure 7 montre très schématiquement une préforme fibreuse 500 permettant d'obtenir, après densification par une matrice et usinage éventuel, une aube en matériau composite à muret anti-basculement et plateau de léchettes de talon intégrés telle que l'aube 200 illustrée par la figure 2. La préforme 500 est obtenue par tissage tridimensionnel ou tissage multicouches de trois parties et découpage de ces parties en tronçons comme déjà décrit ci-avant en relation avec les figures 3 à 5, et par moulage avec déformation de la bande pour reproduire le profil incurvé de la pale de l'aube et déformation des plateaux inférieurs et supérieurs pour reproduire des formes semblables à celles du muret anti-basculement et du plateau de léchettes de talon, comme le montre la figure 7. On obtient ainsi une préforme 500 avec une partie 520 de préforme de pale, une partie 550 de préforme de pied (avec préforme d'échasse) et des parties 550, 570 de préforme de muret anti-basculement et de préforme de plateau de léchettes de talon.

Comme décrit plus loin, les étapes de réalisation d'une préforme d'aube à partir d'une ébauche fibreuse sont avantageusement réalisées après traitement des fibres de l'ébauche et imprégnation de celle-ci par une composition de consolidation.

Un mode de tissage tridimensionnel de l'ébauche fibreuse 300 sera maintenant décrit plus en détail.

Il est supposé que le tissage est réalisé avec des fils de chaîne s'étendant dans la direction longitudinale X de l'ébauche, étant noté qu'un tissage avec des fils de trame dans cette direction est également possible.

La variation d'épaisseur de la bande 302 sur sa largeur est obtenue en utilisant des fils de chaîne de titre variable. On peut en variante ou en complément faire varier la contexture des fils de chaîne (nombre de fils par unité de longueur en sens trame), une contexture plus faible autorisant un amincissement plus important lors de la mise en forme de la préforme par moulage.

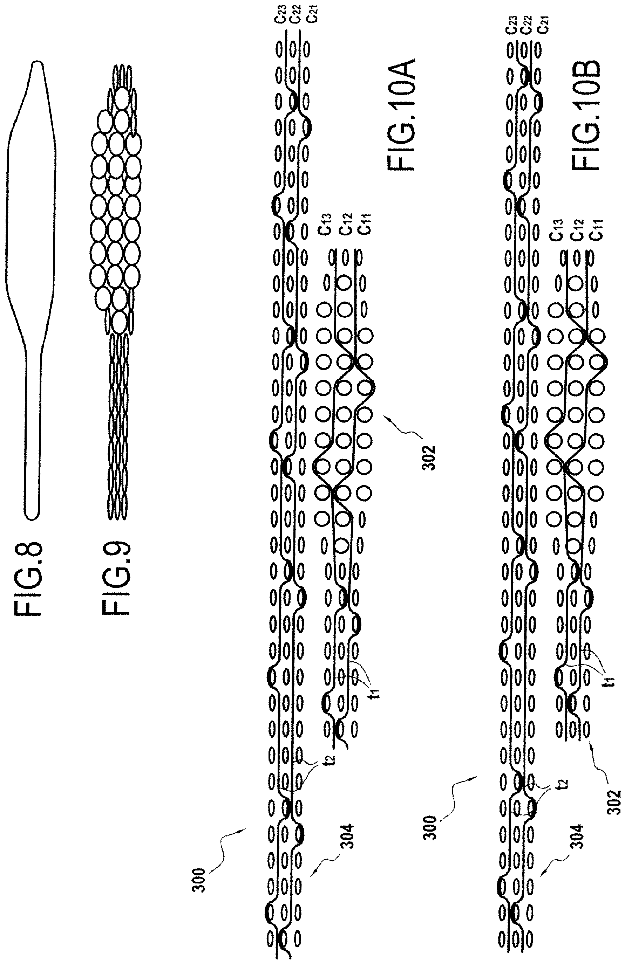

Ainsi, pour obtenir un profil de pale d'aube tel que représenté en projection à plat sur la figure 8, on peut utiliser 3 couches de fils de chaîne de titre et de contexture variables comme illustré par la figure 9.

Dans un exemple de réalisation, les fils utilisés peuvent être des fils de carbure de silicium (SiC) fournis sous la dénomination "Nicalon" par la société japonaise Nippon Carbon et ayant un titre (nombre de filaments) de 0,5K (500 filaments).

On forme la chaîne avec des fils SiC de 0,5K et des fils SiC de 1K obtenus par la réunion de deux fils de 0,5K, les deux fils étant réunis par guipage. Le guipage est réalisé avantageusement avec un fil à caractère fugace susceptible d'être éliminé après tissage, par exemple un fil en alcool polyvinylique (PVA) éliminable par dissolution dans l'eau.

Le tableau I ci-dessous donne, pour chaque colonne de fils de chaîne, la contexture (nombre de fils/cm dans la longueur du profil), le nombre de fils 0,5K, le nombre de fils 1K et l'épaisseur de profil en mm, celle-ci variant ici entre 1 mm et 2,5 mm environ :

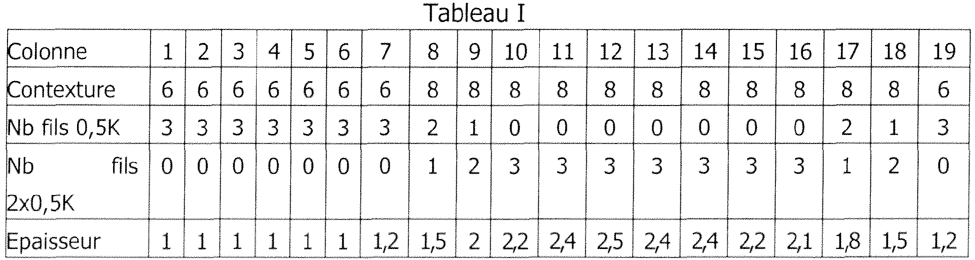

Bien entendu, selon les titres de fils disponibles, différentes combinaisons de nombres de couches de fils et de variations de contexture et de titre pourront être adoptées pour le profil à obtenir.

Les figures 10A, 10B montrent, en coupe chaîne, deux plans successifs d'une armure pouvant être utilisée pour le tissage de l'ébauche fibreuse 300 hors de la surépaisseur 303.

La bande 302 de l'ébauche fibreuse 300 comprend un ensemble de couches de fils de chaîne, le nombre de couches étant ici par exemple égal à 3 (couches C₁₁, C₁₂, C₁₃). Les fils de chaîne sont liés par des fils de trame t₁ par tissage tridimensionnel.

La bande 304 comprend aussi un ensemble de couches de fils de chaîne par exemple également égal à 3 (couches C₂₁, C₂₂, C₂₃) liés par des fils de trame t₂ par tissage tridimensionnel, comme la bande 302.

On note que les fils de trame t₁ ne s'étendent pas dans les couches de fils de chaîne de la bande 304 et que les fils de trame t₂ ne s'étendent pas dans les couches de fils de chaîne de la bande 302 afin d'assurer une déliaison.

Dans l'exemple illustré, le tissage est un tissage multicouches réalisé avec une armure de type satin, ou multi-satin. D'autres types de tissage tridimensionnel pourront être utilisés, par exemple un tissage multicouches à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

Différents modes de tissage tridimensionnel sont notamment décrits dans le document WO 2006/136755.

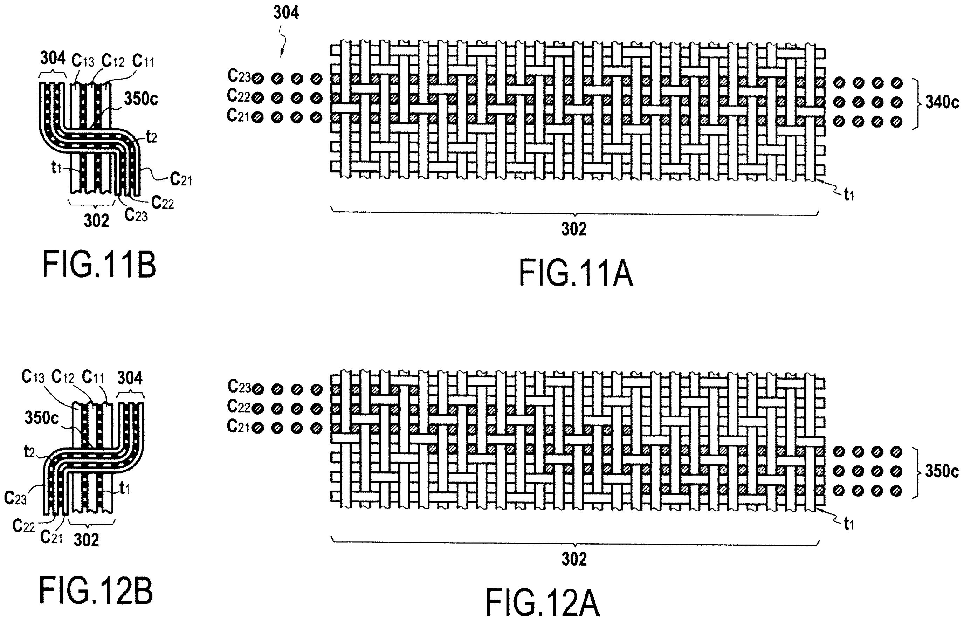

La figure 11A est une vue en coupe parallèlement aux sens chaîne et trame au niveau de la traversée de la bande 302 par la partie de raccordement 340c de la bande 304 de l'ébauche fibreuse de la figure 3, les fils de chaîne de cette partie de raccordement étant vus en coupe. Chaque couche de fils de chaîne s'étend, dans cette partie de raccordement 340c, dans une direction perpendiculaire à la direction trame de la bande 302. Le passage de la bande 304 d'un côté à l'autre de la bande 302 est réalisé, lors du tissage, en faisant traverser l'ensemble des fils de chaîne et de trame de la bande 302 par chaque fil de chaîne de la bande 304, individuellement.

La figure 11B est une vue en coupe trame au niveau de la traversée de la bande 302 par la partie de raccordement 340c de la bande 304 de l'ébauche fibreuse de la figure 3. Dans l'exemple illustré, comme déjà indiqué, la partie de raccordement 340c s'étend perpendiculairement à la direction chaîne de la bande 302. Toutefois, on pourra avoir une partie de raccordement 350c qui s'étend en faisant un angle non nul par rapport à la normale à la direction chaîne, selon l'orientation désirée du plateau de becquets de talon d'aube (ou du plateau de léchettes de talon).

La figure 12A est une vue en coupe parallèlement aux sens chaîne et trame au niveau de la traversée de la bande 302 par la partie de raccordement 350ç de la bande 304 de l'ébauche fibreuse de la figure 3, les fils de chaîne de cette partie de raccordement étant vus en coupe. Chaque couche de fils de chaîne s'étend, dans cette partie de raccordement 350c, dans une direction perpendiculaire à la direction trame de la bande 302 suivant un profil ondulé.

La figure 12B est une vue en coupe trame au niveau de la traversée de la bande 302 par la partie de raccordement 350c de la bande 304. Dans l'exemple illustré, comme déjà indiqué, la partie de raccordement 350c s'étend perpendiculairement à la direction chaîne de la bande 302 suivant un profil ondulé. Toutefois, comme pour la partie de raccordement 340c, on pourra avoir une partie de raccordement 350c qui s'étend de façon rectiligne en faisant un angle non nul par rapport à la normale à la direction chaîne, selon l'orientation désirée du plateau de becquets de talon d'aube (ou du plateau de léchettes de talon).

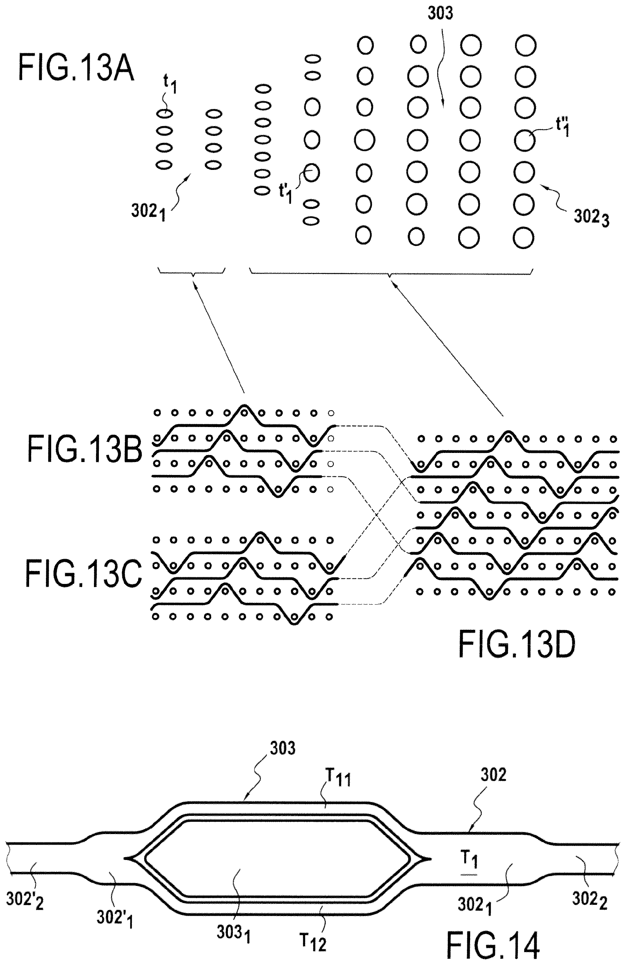

La surépaisseur 303 peut être obtenue en utilisant des fils de trame de plus gros titre et des couches supplémentaires de fils de trame, comme le montre par exemple la figure 13A.

Sur la figure 13A, le nombre de couches de fils de trame passe dans cet exemple de 4 à 7 entre une partie 302₁ de la bande 302, correspondant à l'échasse de l'aube et la partie 302₃ de la bande 302 présentant la surépaisseur 303.

En outre, des fils de trame t₁, t'₁, t"₁ de titres différents sont utilisés, les fils t₁ étant par exemple des fils de SiC "Nicalon" de titre 0,5K (500 filaments), les fils t'₁ étant obtenus par la réunion de 2 fils de 0,5K et les fils t"₁ par la réunion de 3 fils de 0,5K.

Le tissage dans la partie d'ébauche 302₃ nécessite des couches de fils de chaîne en plus grand nombre que dans la partie 302₁. Cela est avantageusement réalisé lors de la transition entre la partie 302₁ et la partie 302₃ en diminuant le nombre de plans de chaîne en constituant chaque plan de chaîne dans la partie 302₃ par la réunion des fils de chaîne de deux plans de chaîne de la partie 302₁. Les figures 13B et 13C montrent deux plans de chaîne voisins dans la partie 302₁ et la figure 13D montre un plan de chaîne obtenu dans la partie 302₃ par la réunion des plans de chaîne des figures 13B et 13C. Sur les figures 13B, 13C et 13D, on n'a pas montré les titres différents des fils de chaîne (comme montré sur la figure 9) ou des fils de trame (comme montré sur la figure 13A) par souci de simplicité. Entre les figures 13B, 13C, d'une part, et la figure 13D, d'autre part, les tirets montrent comment les fils de chaîne des différentes couches dans les figures 13B, 13C forment les couches de fils de chaîne de la figure 13D.

Bien entendu, différentes combinaisons de nombres de couches de trame et de titres de fils de trame pourront être adoptées pour former la surépaisseur 303.

Selon un autre mode de réalisation montré schématiquement sur la figure 14, la surépaisseur 303 peut être obtenue en introduisant un insert lors du tissage de la bande 302.

Sur la figure 14, l'ensemble T₁ de couches de fils de trame de la partie 302₁ de la bande 302 correspondant à l'échasse de l'aube est divisé par déliaison lors du tissage en deux sous-ensembles T₁₁, T₁₂ entre lesquels un insert 303₁ est introduit. Dans l'exemple illustré, la partie 302₁ a une épaisseur plus importante que celle de la partie 302₂ de la bande 302 correspondant à la pale de l'aube. La transition entre la partie 302₂ et la partie 302₁ pourra être réalisée de la même manière que décrit plus haut pour la transition entre les parties 302₁ et 302₃ de la figure 13A. La traversée de la nappe 302 par la nappe 304 au niveau de la partie de raccordement 340c de la figure 3 pourra éventuellement être réalisée à travers la partie 302₁ de plus forte épaisseur.

A l'extrémité de l'insert 303, opposée à la partie 302₁, les sous-ensembles T₁₁, T₁₂ de couches de fils de trame sont à nouveau réunis par tissage pour former une partie 302'₁ de même épaisseur que la partie 302₁, puis, par réduction d'épaisseur, une partie 302'₂ de même épaisseur que la partie 302₂, la partie 302'₂ formant la partie correspondant à une pale d'aube pour l'ébauche suivante tissée.

L'insert 303₁ est de préférence en céramique monolithique, de préférence le même matériau céramique que celui de la matrice du matériau composite de l'aube à fabriquer. Ainsi, l'insert 303₁ peut être un bloc de SiC obtenu par frittage de poudre SiC.

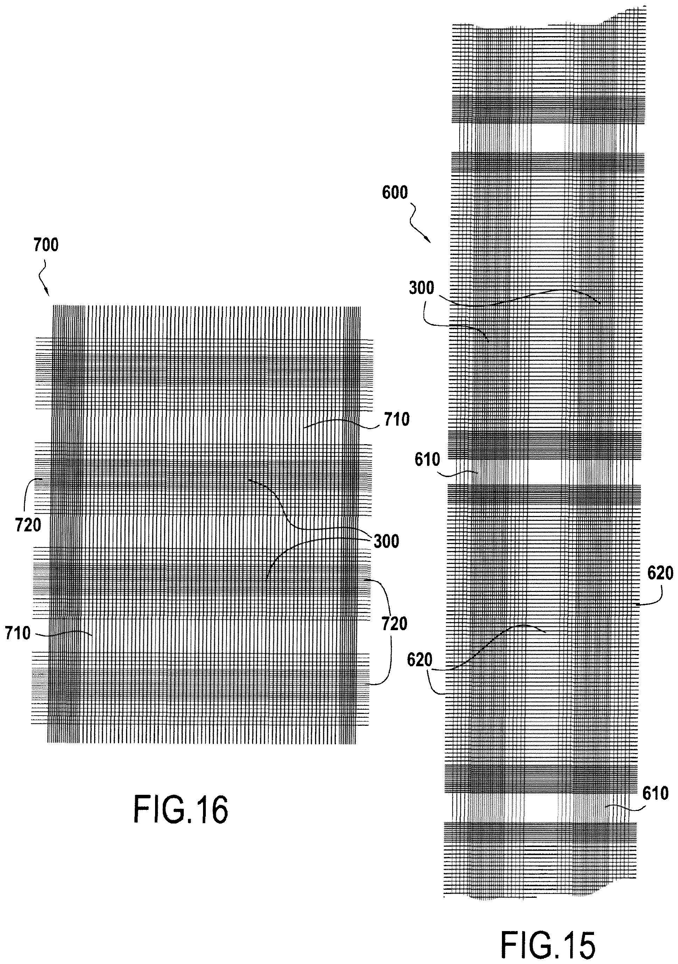

Comme le montre très schématiquement la figure 15, une pluralité d'ébauches fibreuses 600 peut être obtenue par tissage d'une bande 300 dans laquelle sont formées une ou plusieurs rangées d'ébauches fibreuses successives. Des zones de sur-longueurs 610, 620 sont ménagées en sens chaîne (uniquement fils de chaîne) et en sens trame (uniquement fils de trame) pour éviter des phénomènes de bord liés au tissage, laisser une plus grande liberté de déformation lors de la mise en forme de la préforme et aménager des zones de transition entre ébauches 100.

La figure 16 montre une variante de réalisation selon laquelle une bande 700 est réalisée avec une rangée d'ébauches 300 tissées en sens trame perpendiculairement à la direction longitudinale de la bande. Des zones de sur-longueurs 710, 720 sont également ménagées en sens chaîne et en sens trame. Plusieurs rangées d'ébauches 300 peuvent être tissées, la largeur de la bande 400 étant adaptée à cet effet.

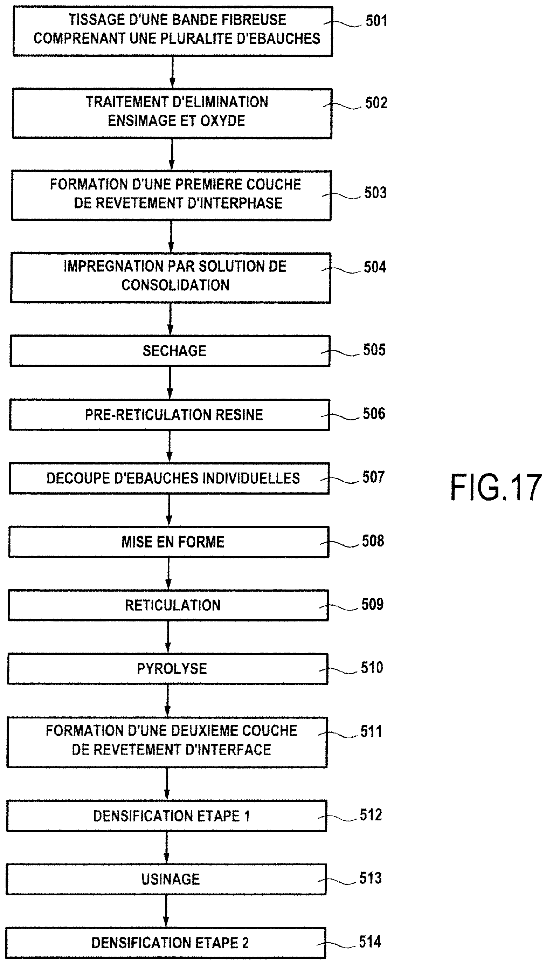

Des étapes successives d'un procédé de fabrication d'une aube en matériau composite selon un mode de mise en oeuvre de l'invention sont indiquées sur la figure 17.

A l'étape 501, une bande fibreuse est tissée par tissage tridimensionnel comprenant une pluralité d'ébauches fibreuses, par exemple plusieurs rangées d'ébauches fibreuses orientées en sens chaîne, comme montré sur la figure 15. Pour des aubes de turbomachine destinées à une utilisation à température élevée et notamment en environnement corrosif (notamment humidité), on utilise pour le tissage des fils formés de fibres en céramique, notamment des fibres de carbure de silicium (SiC).

A l'étape 502, la bande fibreuse est traitée pour éliminer l'ensimage présent sur les fibres et la présence d'oxyde à la surface des fibres. L'élimination de l'oxyde est obtenue par traitement acide, notamment par immersion dans un bain d'acide fluorhydrique. Si l'ensimage n'est pas éliminable par le traitement acide, un traitement préalable d'élimination de l'ensimage est réalisé, par exemple par décomposition de l'ensimage par bref traitement thermique.

A l'étape 503, une couche mince de revêtement d'interphase est formée sur les fibres de la bande fibreuse par infiltration chimique en phase gazeuse ou CVI ("Chemical Vapor Infiltration"). Le matériau du revêtement d'interphase est par exemple du carbone pyrolytique ou pyrocarbone (PyC), du nitrure de bore (BN) ou du carbone dopé au bore (BC, avec par exemple 5%at à 20%at de B, le complément étant C). La mince couche de revêtement d'interphase est de préférence de faible épaisseur, par exemple au plus égale à 100 nanomètres, voire au plus égale à 50 nanomètres, de manière à conserver une bonne capacité de déformation des ébauches fibreuses. De préférence, l'épaisseur est au moins égale à 10 nanomètres.

A l'étape 504, la bande fibreuse avec les fibres revêtues d'une mince couche de revêtement d'interphase est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane ou polysiloxane précurseur de SiC.

Après séchage par élimination du solvant éventuel de la résine (étape 505), une pré-réticulation de la résine peut être effectuée (étape 506). La pré-réticulation, ou réticulation incomplète permet d'accroître la raideur, donc la tenue, tout en préservant la capacité de déformation nécessaire pour la réalisation de préformes d'aubes.

A l'étape 507, les ébauches fibreuses individuelles sont découpées, comme illustré par la figure 4.

A l'étape 508, une ébauche fibreuse ainsi découpée est mise en forme (comme illustré par les figures 5 à 7) et placée dans un moule par exemple en graphite pour conformation de la partie de préforme de pale et pied et des parties de préforme de plateforme et de talon.

Ensuite, la réticulation de la résine est achevée (étape 509) et la résine réticulée est pyrolysée (étape 510). La réticulation et la pyrolyse peuvent être enchaînées par élévation progressive de la température dans le moule.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Des étapes d'élimination d'ensimage, de traitement acide et de formation de revêtement d'interphase pour un substrat en fibres SiC sont connues. On pourra se référer au document US 5 071 679.

Une deuxième couche d'interphase est formée par CVI (étape 511) afin d'obtenir globalement une interphase fibres-matrice ayant une épaisseur suffisante pour assurer sa fonction de défragilisation du matériau composite. La deuxième couche d'interphase peut être en matériau choisi parmi PyC, BN, BC, pas nécessairement le même que celui de la première couche d'interphase. L'épaisseur de la deuxième couche d'interphase est de préférence au moins égale à 100 nanomètres.

La réalisation d'une interphase en deux couches, comme indiquée ci-avant est préférée. Elle est décrite dans la demande de brevet, français déposée sous le N° 08 54937 par la demanderesse et publiée sous le numéro FR 2 933 970.

Une densification par une matrice de la préforme consolidée est ensuite réalisée. Pour une aube de turbomachine destinée à une utilisation à température élevée, et notamment en milieu corrosif, la matrice est en céramique, par exemple en SiC. On peut réaliser la densification par CVI, auquel cas la formation de la deuxième couche d'interphase et la densification par la matrice peuvent être enchaînées dans un même four.

La densification peut être réalisée en deux étapes successives (étapes 512 et 514) séparées par une étape 513 d'usinage de l'aube aux dimensions désirées.

On notera qu'un pré-usinage peut être réalisé entre les étapes 509 et 510, c'est-à-dire après réticulation et avant pyrolyse de la résine.

Des étapes successives d'un procédé de fabrication d'une aube en matériau composite selon un autre mode de mise en oeuvre de l'invention sont indiquées sur la figure 17.

L'étape 601 de tissage tridimensionnel d'une bande fibreuse comprenant une pluralité d'ébauches fibreuses et l'étape 602 de traitement d'élimination d'ensimage et d'oxyde sont semblables aux étapes 501 et 502 du mode de réalisation de la figure 16.

A l'étape 603, des ébauches fibreuses individuelles sont découpées dans la bande fibreuse, puis chaque ébauche fibreuse individuelle est mise en forme dans un moule ou conformateur (étape 604) pour obtenir une préforme fibreuse d'aube par conformation de la partie de préforme de pale et pied et des parties de préforme de plateforme et de talon.

A l'étape 605, un revêtement d'interphase de défragilisation est formé par CVI sur les fibres de la préforme maintenue dans le conformateur. Le matériau du revêtement d'interphase est par exemple PyC, BN ou BC, comme précédemment mentionné. L'épaisseur du revêtement d'interphase est d'environ une à quelques centaines de nanomètres.

La préforme étant toujours maintenue dans le conformateur, une consolidation de la préforme par densification partielle est réalisée (étape 606), la consolidation étant réalisée par formation de dépôt céramique sur les fibres par CVI.

La formation du revêtement d'interphase par CVI et la consolidation par dépôt céramique par CVI peuvent être enchaînées dans un même four CVI.

Le conformateur est de préférence en graphite et présente des trous facilitant le passage des phases gazeuses réactionnelles donnant le dépôt d'interphase et le dépôt céramique par CVI.

Lorsque la consolidation est suffisante pour que la préforme puisse être manipulée tout en conservant sa forme sans assistance d'outillage de maintien, la préforme consolidée est extraite du conformateur et la densification par une matrice céramique par CVI est réalisée. La densification peut être réalisée en deux étapes successives (étapes 607 et 609) séparées par une étape 608 d'usinage de l'aube aux dimensions désirées.

Dans ce qui précède, on a envisagé la réalisation d'un profil de pale à épaisseur variable par l'utilisation de fils de titre et/ou contexture variables. Il est possible, en variante, de réaliser la partie d'ébauche fibreuse correspondant à la partie de préforme de pale avec un certain nombre de couches de fils de même titre et avec contexture fixe, la variation d'épaisseur du profil étant réalisée lors de l'usinage après première étape de densification ou lors d'un pré-usinage de la préforme d'aube consolidée.

Par ailleurs, selon les conditions d'utilisation envisagées pour l'aube, les fibres du renfort fibreux de l'aube peuvent être en un matériau autre qu'une céramique, par exemple en carbone, et la matrice peut être en un matériau autre qu'une céramique, par exemple en carbone ou en une résine, l'invention étant bien entendu applicable aussi à la fabrication d'aubes en matériau composite à matrice organique.

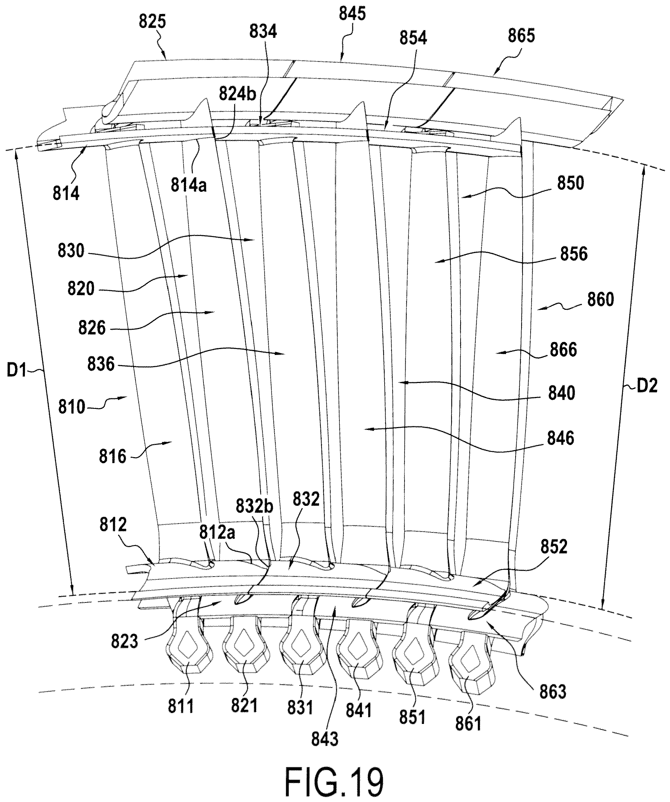

La figure 19 montre le montage sur un rotor ou disque 800 de turbomachine d'une pluralité d'aubes 810, 820, 830, 840, 850 et 860, les aubes 810, 830 et 850 présentant une structure similaire à l'aube 100 de la figure 1 tandis que les aubes 820, 840 et 860 présentent une structure similaire à l'aube 200 de la figure 2.

Les aubes 810, 820, 830, 840, 850 et 860 sont montées sur le rotor 800 par engagement des pieds 811, 821, 831, 841, 851 et 861 de chaque aube respectivement dans des logements 801, 802, 803, 804, 805 et 806 de forme correspondante aménagé à la périphérie du rotor.

Comme décrit ci-avant pour l'aube 100, les aubes 810, 830 et 850 comportent chacune respectivement, au niveau de l'extrémité radiale interne de leur pale 816, 836 et 856, une plateforme 812, 832 et 852 (incluant à ses extrémités des becquets de recouvrement) tout en étant dépourvues d'un muret anti-basculement habituellement aussi présent dans cette zone. En outre, les aubes 810, 830 et 850 comportent chacune respectivement, au niveau de l'extrémité radiale externe de leur pale 816, 836 et 856, un plateau de becquets de talon d'aube 814, 834 et 854 tout en étant dépourvues de léchettes habituellement aussi présentes dans cette zone.

Par ailleurs, comme décrit ci-avant pour l'aube 200, les aubes 820, 840 et 860 comportent chacune respectivement, au niveau de l'extrémité radiale interne de leur pale 826, 846 et 866, un muret anti-basculement 823, 843 et 863 tout en étant dépourvues d'une plateforme habituellement aussi présente dans cette zone. En outre, les aubes 820, 840 et 860 comportent chacune respectivement, au niveau de l'extrémité radiale externe de leur pale 826, 846 et 866, un plateau de léchettes de talon d'aube 825, 845 et 865 tout en étant dépourvues de becquets habituellement aussi présents dans cette zone.

Comme montrées sur la figure 19, les aubes s'emboitent les unes avec les autres, les aubes 820, 840 et 860 recevant au-dessus de leur muret anti-basculement 823, 843 et 863 les plateformes 812, 832 et 852 des aubes 810, 830 et 850. Plus précisément, chaque extrémité radiale interne des pales des aubes du type de l'aube 100 déjà décrite, par exemple l'aube 820, est entourée du côté intrados de la pale, ici la pale 826, par la portion évidée 812a de la plateforme 812 de l'aube 810 et du côté extrados, par la portion saillante 832b de la plateforme 832 de l'aube 830. Ainsi, il est possible de loger l'extrémité radiale interne d'une pale d'une aube du type de l'aube 200 déjà décrite entre les plateformes de deux aubes du type de l'aube 100 déjà décrite et disposées de chaque côté de l'aube du type de l'aube 200. Les autres parties des bords d'une plateforme situées de part et d'autre de la portion évidée et de la portion saillante sont en contact avec les parties correspondantes des plateformes des aubes adjacentes de manière à former une surface sensiblement continue permettant de définir radialement à l'intérieur la veine d'écoulement du flux gazeux.

De même, chaque extrémité radiale externe des pales des aubes du type de l'aube 100 déjà décrite, par exemple l'aube 820, est entourée du côté intrados de la pale, ici la pale 826, par la portion évidée 814a du plateau de becquets 814 de l'aube 810 et du côté extrados, par la portion saillante 834b du plateau de becquets 834 de l'aube 830. Ainsi, il est possible de loger l'extrémité radiale externe d'une pale d'une aube du type de l'aube 200 déjà décrite entre les plateaux de becquets de deux aubes du type de l'aube 100 déjà décrite et disposées de chaque côté de l'aube du type de l'aube 200. Les autres parties des bords des plateaux de becquets de talon d'aube situées de part et d'autre de la portion évidée et de la portion saillante sont en contact avec les parties correspondantes des plateaux de becquets des aubes adjacents de manière à former une surface sensiblement continue permettant de définir radialement à l'extérieur la veine d'écoulement du flux gazeux.

En d'autres termes, la fonction définition de veine est assurée par la réunion des plateformes 812, 832 et 852 et des plateaux de becquets de talon 814, 834 et 854.

La réunion des plateaux de léchettes de talon d'aube 825, 845 et 865 forme une paroi continue de léchettes au dessus des plateaux de becquets de talon d'aube assurant ainsi la fonction d'étanchéité.

Dans l'exemple ici considéré, les bords des murets anti-basculement adjacents ne se rejoignent pas. Toutefois, les bords de ces murets peuvent être prolongés et présenter des formes complémentaires pour former une paroi continue sous les plateformes.

La distance D1 entre les plateformes 812, 832 et 852 et les plateaux de becquets 814, 834 et 854 des aubes 810, 830 et 850 est inférieure à la distance D2 entre les murets anti-basculement 823, 843 et 863 et les plateaux de léchettes de talon d'aube 825, 845 et 865 des aubes 820, 840 et 860 afin de permettre leur emboîtement les unes avec les autres.

Un jeu d'aube selon l'invention peut être formé par une première aube et une deuxième aube respectivement du type de l'aube 100 et de l'aube 200 décrites précédemment.

L'aube 100 décrite ci-avant en relation avec la figure 2 comprend une plateforme 140 et un plateau de becquets de talon d'aube 160 tout en étant dépourvue de muret anti-basculement et de léchettes de talon d'aube tandis que l'aube 200 comprend un muret anti-basculement 150 et un plateau de léchettes de talon d'aube 170 tout en étant dépourvue de plateforme et de becquets de talon d'aube.

## Revendications

1. Procédé de fabrication d'une aube (100; 200) de turbomachine en matériau composite comprenant un renfort fibreux densifié par une matrice, le procédé comprenant :
- la réalisation par tissage tridimensionnel d'une ébauche fibreuse en une seule pièce,
- la mise en forme de l'ébauche fibreuse (300) pour obtenir une préforme fibreuse d'aube en une seule pièce ayant :
- une première partie (320) formant préforme de pale (420) et pied d'aube (430),
- une deuxième partie (340) formant préforme d'une plateforme d'aube (440), ladite préforme d'aube étant alors dépourvue de préforme de muret anti-basculement d'aube, ou formant préforme d'un muret anti-basculement d'aube (550), ladite préforme d'aube étant alors dépourvue de préforme de plateforme d'aube, et
- une troisième partie (360) formant préforme d'un plateau de becquets de talon d'aube (460), ladite préforme d'aube étant alors dépourvue de préforme de plateau de léchettes de talon d'aube, ou
- une deuxième partie formant préforme d'un muret anti-basculement d'aube (550), ladite préforme d'aube étant alors dépourvue de préforme de plateforme d'aube, et
- une troisième partie (360) formant préforme d'un plateau de becquets de talon d'aube (460), ladite préforme d'aube étant alors dépourvue de préforme de plateau de léchettes de talon d'aube, ou formant préforme d'un plateau de léchettes de talon d'aube (570), ladite préforme d'aube étant alors dépourvue de préforme de plateau de becquets de talon d'aube,
- la densification de la préforme par une matrice pour obtenir une aube en matériau composite ayant un renfort fibreux constitué par la préforme et densifié par la matrice, et formant une seule pièce avec deux des éléments suivants: plateforme d'aube, muret anti-basculement d'aube, becquets de talon d'aube ou avec deux des éléments suivants : muret anti-basculement d'aube, becquets de talon d'aube et léchettes de talon d'aube.

2. Procédé selon la revendication 1, dans lequel, dans la direction longitudinale de l'ébauche fibreuse correspondant à la direction longitudinale de l'aube à fabriquer, l'ébauche fibreuse comprend un premier ensemble (302) de plusieurs couches de fils qui sont liées entre elles pour former une première partie de l'ébauche correspondant à la préforme de pale (420) et pied d'aube (430), et un deuxième ensemble (304) de plusieurs couches de fils qui sont liées entre elles au moins localement pour former une deuxième partie de l'ébauche correspondant à une préforme de plateforme (440) ou de muret anti-basculement d'aube (550) et une troisième partie de l'ébauche correspondant à une préforme de plateau de becquets (460) ou de léchettes de talon d'aube (570), les fils du premier ensemble (302) de couches de fils ne sont pas liés aux fils du deuxième (304) ensemble de couches de fils, et premier ensemble de couches de fils est traversé par des fils du deuxième ensemble de couches de fils au niveau de la ou de chaque deuxième partie de l'ébauche.

3. Procédé selon la revendication 2, dans lequel l'ébauche fibreuse est tissée avec un deuxième ensemble continu de couches de fils et la mise en forme de l'ébauche fibreuse comprend l'élimination par découpe de parties du deuxième ensemble de couches de fils extérieures à la deuxième partie de l'ébauche fibreuse et à la troisième partie de l'ébauche fibreuse.

4. Procédé selon l'une quelconque des revendications 2 et 3, dans lequel à l'emplacement ou au moins à l'un des emplacements où le premier ensemble de couches de fils est traversé par des fils du deuxième ensemble de couches de fils, l'intersection entre une couche de fils du premier ensemble et une couche de fils du deuxième ensemble suit une ligne non orthogonale à la direction longitudinale de l'ébauche fibreuse.

5. Procédé selon l'une quelconque des revendications 1 à 4, dans lequel, dans la première partie de l'ébauche fibreuse et dans une direction correspondant à celle s'étendant le long du profil d'une pale d'épaisseur variable dans l'aube à fabriquer, le nombre de couches de fils dans le premier ensemble de couches de fils est constant.

6. Procédé selon la revendication 5, dans lequel les fils du premier ensemble de couches de fils sont de titre variable.

7. Procédé selon la revendication 5 ou 6, dans lequel la contexture des fils du premier ensemble de couches de fils est variable.

8. Procédé selon l'une quelconque des revendications 1 à 7, dans lequel l'on réalise par tissage tridimensionnel une bande (700) comprenant une succession d'ébauches fibreuses (300).

9. Procédé selon l'une quelconque des revendications 1 à 8, dans lequel les ébauches sont tissées avec leur direction longitudinale correspondant à celle des aubes à fabriquer s'étendant en sens trame.

10. Procédé selon l'une quelconque des revendications 1 à 8, dans lequel les ébauches sont tissées avec leur direction longitudinale correspondant à celle des aubes à fabriquer s'étendant en sens chaîne.

11. Aube (100; 200) de turbomachine en matériau composite comprenant un renfort fibreux obtenu par tissage tridimensionnel de fils et densifié par une matrice, l'aube comprenant une première partie constitutive de pale (120; 220) et pied d'aube (130; 230), dans laquelle ladite première partie forme une seule pièce avec au moins :
- une deuxième partie constitutive d'une plateforme d'aube (140), ladite aube étant alors dépourvue d'un muret anti-basculement d'aube, ou d'un muret anti-basculement d'aube (250), ladite aube étant alors dépourvue d'une plateforme d'aube, et
- une troisième partie constitutive d'un plateau de becquets de talon d'aube (160), ladite aube étant alors dépourvue de plateau de léchettes de talon d'aube, ou
- une deuxième partie constitutive d'un muret anti-basculement d'aube (250), ladite aube étant alors dépourvue d'une plateforme d'aube, et
- une troisième partie constitutive d'un plateau de becquets de talon d'aube (160), ladite aube étant alors dépourvue de plateau de léchettes de talon d'aube, ou d'un plateau de léchettes de talon d'aube (270), ladite aube étant alors dépourvue d'un plateau de becquets de talon d'aube.

12. Jeu d'aubes comprenant une première et une deuxième aubes (100, 200) selon la revendication 11, dans lequel la deuxième partie de la première aube (100) est constitutive d'une plateforme d'aube (140), ladite première aube étant dépourvue d'un muret anti-basculement d'aube, la troisième partie de ladite première aube étant constitutive d'un plateau de becquets de talon d'aube (160), ladite première aube étant dépourvue de plateau de léchettes de talon d'aube,
et la deuxième partie de la deuxième aube (200) est constitutive d'un muret anti-basculement d'aube (250), ladite deuxième aube étant alors dépourvue d'une plateforme d'aube, la troisième partie de ladite deuxième aube étant constitutive d'un plateau de léchettes de talon d'aube (270), ladite deuxième aube étant alors dépourvue d'un plateau de becquets de talon d'aube.

13. Disque de turbomachine comprenant une pluralité de jeux d'aubes selon la revendication 12.

14. Turbomachine équipée d'une pluralité de jeux d'aubes selon la revendication 12.

## Patentansprüche

1. Verfahren zur Herstellung einer Turbomaschinenschaufel (100; 200) aus Verbundmaterial, umfassend eine matrixverdichtete Faserverstärkung, wobei das Verfahren umfasst:
- Herstellen eines einstückigen Faserrohlings durch dreidimensionales Weben,
- Formen des Faserrohlings (300), um eine einstückige faserige Vorform der Schaufel zu erhalten, die aufweist:
- einen ersten Teil (320), der eine Vorform für Blatt (420) und Schaufelfuß (430) bildet,
- einen zweiten Teil (340), der eine Vorform für eine Schaufelplattform (440) bildet, wobei die Schaufelvorform dann frei von einer Vorform für eine Schaufelkippschutzwand ist, oder eine Vorform für eine Schaufelkippschutzwand (550) bildet, wobei die Schaufelvorform dann frei von einer Vorform für eine Schaufelplattform ist, und
- einen dritten Teil (360), der eine Vorform für eine Schaufelabsatz-Spoilerplatte (460) bildet, wobei die Schaufelvorform dann frei von einer Vorform für eine Schaufelabsatz-Schneidendichtungsplatte ist, oder
- einen zweiten Teil, der eine Vorform für eine Schaufelkippschutzwand (550) bildet, wobei die Schaufelvorform dann frei von einer Vorform für eine Schaufelplattform ist, und
- einen dritten Teil (360), der eine Vorform für eine Schaufelabsatz-Spoilerplatte (460) bildet, wobei die Schaufelvorform dann frei von einer Vorform für eine Schaufelabsatz-Schneidendichtungsplatte ist, oder eine Vorform für eine Schaufelabsatz-Schneidendichtungsplatte (570) bildet, wobei die Schaufelvorform dann frei von einer Vorform für eine Schaufelabsatz-Spoilerplatte ist,
- Verdichten der Vorform durch eine Matrix, um eine Schaufel aus Verbundwerkstoff zu erhalten, die eine faserige Verstärkung aufweist, die durch die Vorform gebildet und durch die Matrix verdichtet wird, und die ein einziges Stück mit zwei der folgenden Elemente bildet: Schaufelplattform, Schaufelkippschutzwand, Schaufelabsatzspoiler, oder mit zwei der folgenden Elemente:
Schaufelkippschutzwand, Schaufelabsatzspoiler und
Schaufelabsatzschneidendichtungen.

2. Verfahren nach Anspruch 1, wobei der Faserrohling in der Längsrichtung des Faserrohlings, die der Längsrichtung der zu fertigenden Schaufel entspricht, umfasst: einen ersten Satz (302) von mehreren Garnschichten, die miteinander verbunden sind, um einen ersten Teil des Rohlings zu bilden, der der Vorform für das Blatt (420) und den Klingenfuß (430) entspricht, und einen zweiten Satz (304) von mehreren Garnschichten, die zumindest lokal miteinander verbunden sind, um einen zweiten Teil des Rohlings, der einer Vorform für eine Plattform (440) oder eine Kippschutzwand der Schaufel (550) entspricht, und einen dritten Teil des Rohlings, der einer Vorform für eine Spoilerplatte (460) oder eine Schneidendichtungsplatte (570) des Schaufelabsatzes entspricht, zu bilden, wobei die Garne des ersten Satzes (302) von Garnschichten nicht mit den Garnen des zweiten Satzes (304) von Garnschichten verbunden sind, und der erste Satz von Garnschichten von Garnen des zweiten Satzes von Garnschichten an dem oder jedem zweiten Teil des Rohlings durchzogen wird.

3. Verfahren nach Anspruch 2, wobei der Faserrohling mit einem zweiten kontinuierlichen Satz von Faserschichten verwebt wird und das Formen des Faserrohlings das teilweise Herausschneiden des zweiten Satzes von äußeren Garnschichten im zweiten Teil des Faserrohlings und im dritten Teil des Faserrohlings umfasst.

4. Verfahren nach einem der Ansprüche 2 und 3, wobei an der Stelle oder mindestens an einer der Stellen, an der bzw. denen der erste Satz von Garnschichten von Garnen des zweiten Satzes von Garnschichten durchzogen wird, der Schnittpunkt zwischen einer Garnschicht des ersten Satzes und einer Garnschicht des zweiten Satzes einer Linie folgt, die nicht orthogonal zur Längsrichtung des Faserrohlings ist.

5. Verfahren nach einem der Ansprüche 1 bis 4, wobei im ersten Teil des Faserrohlings und in einer Richtung, die derjenigen entspricht, die sich entlang des Profils eines Blattes mit variabler Dicke in der zu fertigenden Schaufel erstreckt, die Anzahl der Garnschichten im ersten Satz von Garnschichten konstant ist.

6. Verfahren nach Anspruch 5, wobei die Garne des ersten Satzes von Garnschichten einen variablen Titer aufweisen.

7. Verfahren nach Anspruch 5 oder 6, wobei die Garntextur des ersten Satzes von Garnschichten variabel ist.

8. Verfahren nach einem der Ansprüche 1 bis 7, wobei ein Streifen (700), der eine Folge von Faserrohlingen (300) umfasst, durch dreidimensionales Weben hergestellt wird.

9. Verfahren nach einem der Ansprüche 1 bis 8, wobei die Rohlinge so gewebt werden, dass ihre Längsrichtung derjenigen der zu fertigenden Schaufeln entspricht und sich in Schussrichtung erstreckt.

10. Verfahren nach einem der Ansprüche 1 bis 8, wobei die Rohlinge so gewebt werden, dass ihre Längsrichtung derjenigen der zu fertigenden Schaufeln entspricht und sich in Kettenrichtung erstreckt.

11. Turbomaschinenschaufel (100; 200) aus Verbundmaterial, umfassend eine faserige Verstärkung, die durch dreidimensionales Weben von Garnen erhalten und durch eine Matrix verdichtet wird, wobei die Schaufel einen ersten Bestandteil von Blatt (120; 220) und Schaufelfuß (130; 230) umfasst, wobei dieser erste Teil ein einziges Stück bildet mit mindestens:
- einem zweiten Bestandteil einer Schaufelplattform (140), wobei die Schaufel dann frei von einer Schaufelkippschutzwand ist, oder einer Schaufelkippschutzwand (250), wobei die Schaufel dann frei von einer Schaufelplattform ist, und
- einem dritten Bestandteil einer Schaufelabsatz-Spoilerplatte (160), wobei die Schaufel dann frei von einer Schaufelabsatz-Schneidendichtungsplatte ist, oder
- einem zweiten Bestandteil einer Schaufelkippschutzwand (250), wobei die Schaufel dann frei von einer Schaufelplattform ist, und
- einem dritten Bestandteil einer Schaufelabsatz-Spoilerplatte (160), wobei die Schaufel dann frei von einer Schaufelabsatz-Schneidendichtungsplatte ist, oder einer Schaufelabsatz-Schneidendichtungsplatte (270), wobei die Schaufel dann frei von einer Schaufelabsatz-Spoilerplatte ist.

12. Satz von Schaufeln, umfassend eine erste und eine zweite Schaufel (100, 200) nach Anspruch 11, wobei der zweite Teil der ersten Schaufel (100) konstitutiv für eine Schaufelplattform (140) und die erste Schaufel frei von einer Schaufelkippschutzwand ist, und der dritte Teil der ersten Schaufel konstitutiv für eine Schaufelabsatz-Spoilerplatte (160) und die erste Schaufel frei von einer Schaufelabsatz-Schneidendichtungsplatte ist,
und der zweite Teil der zweiten Schaufel (200) konstitutiv für eine Schaufelkippschutzwand (250) und die zweite Schaufel dann frei von einer Schaufelplattform ist, und der dritte Teil der zweiten Schaufel konstitutiv für eine Schaufelabsatz-Schneidendichtungsplatte (270) und die zweite Schaufel dann frei von einer Schaufelabsatz-Spoilerplatte ist.

13. Turbomaschinenscheibe, umfassend eine Vielzahl von Schaufelsätzen nach Anspruch 12.

14. Turbomaschinenscheibe, die mit einer Vielzahl von Schaufelsätzen nach Anspruch 12 ausgestattet ist.

## Claims

1. Method for fabricating a turbomachine blade (100; 200) made of composite material including a fiber reinforcement densified by a matrix, the method including:
- fabrication by three-dimensional weaving of a one-piece fiber blank,
- shaping of the fiber blank (300) to obtain a one-piece fiber blade preform having:
- a first portion (320) constituting a preform of an airfoil (420) and a blade root (430),
- a second portion (340) constituting a preform of a blade inner platform (440), said blade preform then lacking a blade anti-tilting wall preform, or constituting of a blade anti-tilting wall preform (550), said blade preform then lacking a blade inner platform preform, and
- a third portion (360) constituting a preform of a blade outer platform spoiler plate (460), said blade preform then lacking a blade outer platform wiper plate preform, or
- a second portion constituting a preform of a blade anti-tilting wall (550), said blade preform then lacking a blade inner platform preform, and
- a third portion (360) constituting the preform of a blade outer platform spoiler plate (460), said blade preform then lacking a blade outer platform wiper plate preform, or constituting a preform of a blade outer platform wiper plate (570), said blade preform then lacking a blade outer platform spoiler plate preform,
- densification of the preform by a matrix to obtain a blade made of composite material having a fiber reinforcement consisting of the preform and densified by the matrix, and constituting a single part with two of the following elements: blade inner platform, blade anti-tilting wall, blade outer platform spoilers or with two of the following elements: blade anti-tilting wall, blade outer platform spoilers and blade outer platform wipers.

2. The method according to Claim 1, wherein, in the longitudinal direction of the fiber blank corresponding to the longitudinal direction of the blade to be fabricated, the fiber blank includes a first set (302) of several layers of yarns which are interlinked to constitute a first portion of the blank corresponding to the airfoil (420) and the blade root (430) preform, and a second set (304) of several layers of yarns interlinked at least locally to constitute a second portion of the blank corresponding to an inner platform (440) or blade anti-tilting wall (550) preform and a third portion of the blank corresponding to a spoiler (460) or blade root wiper (570) plate preform, the yarns of the first set (302) of yarn layers are not linked to the yarns of the second set (304) of yarn layers, and the first set of yarn layers has yarns of the second set of yarn layers passing through it at the or each second portion of the blank.

3. The method according to Claim 2, wherein the fiber blank is woven with a second continuous set of yarn layers and the shaping of the fiber blank includes the elimination by cutting out of portions of the second set of yarn layers outside of the second portion of the fiber blank and of the third portion of the fiber blank.

4. The method according to any one of Claims 2 and 3, wherein at the location or at least at one of the locations where the first set of yarn layers has yarns of the second set of yarn layers passing through it, the intersection between a yarn layer of the first set and a yarn layer of the second set follows a line that is not orthogonal to the longitudinal direction of the fiber blank.

5. The method according to any one of Claims 1 to 4, wherein, in the first portion of the fiber blank and in a direction corresponding to that extending along the profile of an airfoil of variable thickness in the blade to be fabricated, the number of yarn layers in the first set of yarn layers is constant.

6. The method according to Claim 5, wherein the yarns of the first set of yarn layers are of variable weight.

7. The method according to Claim 5 or 6, wherein the count of the yarns of the first set of yarn layers is variable.

8. The method according to any one of Claims 1 to 7, wherein a strip (700) including a succession of fiber blanks (300) is fabricated by three-dimensional weaving.

9. The method according to any one of Claims 1 to 8, wherein the blanks are woven with their longitudinal direction corresponding to that of the blades to be fabricated extending in the weft direction.

10. The method according to any one of Claims 1 to 8, wherein the blanks are woven with their longitudinal direction corresponding to that of the blades to be fabricated extending in the warp direction.

11. A turbomachine blade (100; 200) made of composite material including a fiber reinforcement obtained by three-dimensional weaving and densified by a matrix, the blade including a first portion constituting an airfoil (120; 220) and a blade root (130; 230),
wherein said first portion constitutes a single piece with at least:
- a second portion constituting a blade inner platform (140), said blade then lacking a blade anti-tilting wall, or of a blade anti-tilting wall (250), said blade then lacking a blade inner platform, and
- a third portion constituting a blade outer platform spoiler plate (160), said blade then lacking a blade outer platform wiper plate, or
- a second portion constituting a blade anti-tilting wall (250), said blade then lacking a blade inner platform, and
- a third portion constituting a blade outer platform spoiler plate (160), said blade then lacking a blade outer platform wiper plate, or a blade outer platform wiper plate (270), the blade then lacking a blade outer platform spoiler plate.

12. A set of blades including a first and a second blade (100, 200) according to Claim 11, wherein the second portion of the first blade (100) constitutes a blade inner platform (140), said first blade lacking a blade anti-tilting wall, the third portion of said first blade constituting a blade outer platform spoiler plate (160), said first blade lacking a blade outer platform wiper plate,
and the second portion of the second blade (200) constitutes a blade anti-tilting wall (250), said second blade then lacking a blade inner platform, the third portion of said second blade constituting a blade outer platform wiper plate (270), said second blade then lacking a blade outer platform spoiler plate.

13. A turbomachine disk having a plurality of sets of blades according to Claim 12.

14. A turbomachine equipped with a plurality of blade sets according to Claim 12.
